(19) **Europäisches Patentamt European Patent Office Office européen des brevets**

(11) **EP 4 452 439 B1**

(12) **FASCICULE DE BREVET EUROPEEN**

(45) Date de publication et mention
de la délivrance du brevet:
**22.10.2025 Bulletin 2025/43**

(21) Numéro de dépôt: **22836134.1**

(22) Date de dépôt: **13.12.2022**

(51) Classification Internationale des Brevets (IPC):
**B01J 20/28** *(2006.01)*    **C01D 15/00** *(2006.01)*
**B01D 15/18** *(2006.01)*    **B01J 20/08** *(2006.01)*
**C01D 3/16** *(2006.01)*

(52) Classification Coopérative des Brevets (CPC):
**B01D 15/185; B01J 20/08; B01J 20/28052;
C01D 3/16; C01D 15/00;** Y02P 10/20

(86) Numéro de dépôt international:
**PCT/EP2022/085706**

(87) Numéro de publication internationale:
**WO 2023/117597 (29.06.2023 Gazette 2023/26)**

(54) **PROCÉDÉ ET DISPOSITIF D'EXTRACTION EN LIT MOBILE SIMULÉ PAR ADSORPTION DE LITHIUM**

VERFAHREN UND VORRICHTUNG ZUR SIMULIERTEN WANDERBETTEXTRAKTION DURCH LITHIUMADSORPTION

METHOD AND DEVICE FOR SIMULATED MOVING BED EXTRACTION BY LITHIUM ADSORPTION

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priorité: **23.12.2021 FR 2114361**

(43) Date de publication de la demande:
**30.10.2024 Bulletin 2024/44**

(73) Titulaire: **IFP Energies nouvelles
92500 Rueil-Malmaison (FR)**

(72) Inventeurs:
• **BLANCKE, Guillaume
92852 RUEIL-MALMAISON CEDEX (FR)**
• **LEINEKUGEL-LE-COCQ, Damien
92852 RUEIL-MALMAISON CEDEX (FR)**
• **LEFLAIVE, Philibert
92852 RUEIL-MALMAISON CEDEX (FR)**

(74) Mandataire: **IFP Energies nouvelles
Département Propriété Industrielle
Rond Point de l'échangeur de Solaize
BP3
69360 Solaize (FR)**

(56) Documents cités:
WO-A1-2021/119208      WO-A1-2021/146417
CN-A- 106 629 788      CN-A- 113 088 695
FR-A1- 2 976 280       FR-A1- 3 053 264
US-A1- 2012 160 772    US-A1- 2019 248 667

EP 4 452 439 B1

## Description

### Domaine technique

La présente invention se rapporte au domaine de la séparation de lithium par phénomènes d'adsorption. La présente invention se rapporte également au domaine de la séparation en lit mobile simulé.

### Technique antérieure

Les ions lithium coexistent avec des quantités massives de métaux tels que par exemple les alcalins, les alcalino-terreux, le bore et les sulfates, en particulier dans des solutions salines telles que les saumures. Ainsi, ils doivent faire l'objet d'une extraction économique et sélective à partir de ces solutions salines. En effet, les propriétés chimiques du lithium et des métaux alcalins, de préférence le sodium (Na), et le potassium (K) et des alcalino-terreux, de préférence le magnésium (Mg), le calcium (Ca) et le strontium (Sr), rendent difficile la séparation de ces éléments.

Des matériaux solides à base d'oxyhydroxyde d'aluminium AIO(OH) et/ou d'hydroxyde d'aluminium $Al(OH)_3$, sont connus pour leur utilisation comme adsorbant dans les phénomènes d'adsorption/désorption des ions lithium et en particulier dans les procédés d'extraction par adsorption du lithium à partir de solutions salines. Avantageusement, lesdits matériaux permettent l'intercalation d'atomes de lithium dans leur structure et ainsi l'extraction du lithium d'une charge par adsorption, et la production d'un extrait enrichi en lithium par désorption au moyen d'un désorbant.

La demande de brevet FR 3053264 A1 décrit notamment un procédé d'extraction par adsorption du lithium de solutions salines, ledit procédé mettant en oeuvre un matériau solide de formule $(LiCl)_x.2Al(OH)_3,nH2O$ avec n étant compris entre 0,01 et 10, x étant compris entre 0,4 et 1, pour l'extraction de lithium de solutions salines.

Bien que l'utilisation de tels matériaux permette d'obtenir des niveaux de purification de lithium acceptables, la production de lithium par phénomènes d'adsorption peut être améliorée.

### Résumé de l'invention

Dans le contexte précédemment décrit, un premier objet de la présente description est de surmonter les problèmes de l'art antérieur et de fournir un procédé et un dispositif d'extraction par adsorption de lithium permettant d'augmenter la concentration de lithium dans l'extrait. La concentration élevée de lithium dans l'extrait permet notamment de réduire la quantité d'eau à évaporer ou à séparer dans la suite du procédé, permettant ainsi une simplification des équipements du dispositif d'extraction et des gains énergétiques importants.

Un deuxième objet de la présente description est l'obtention d'une teneur très faible en impuretés telles que le calcium, le magnésium ou le bore dans l'extrait, ce qui permet de limiter voire d'éliminer le recours à des étapes de purification du lithium en aval de l'extraction par adsorption.

Un troisième objet de la présente description est de limiter la consommation de désorbant du procédé afin de limiter son impact environnemental.

Avantageusement, la demanderesse a identifié que des matériaux solides lithiés à base d'oxyhydroxyde d'aluminium AIO(OH) et/ou d'hydroxyde d'aluminium $Al(OH)_3$ étaient adaptés pour l'extraction par adsorption de lithium dans un procédé et un dispositif de séparation en lit mobile simulé, ou à contre-courant simulé.

Selon un premier aspect, les objets précités, ainsi que d'autres avantages, sont obtenus par un procédé d'extraction par adsorption de lithium en lit mobile simulé comprenant l'étape suivante :

- on alimente au moins une colonne avec au moins une charge comprenant du lithium et un désorbant, et on soutire au moins un extrait et au moins un raffinat de la colonne, l'au moins une colonne comprenant un solide adsorbant comprenant au moins un oxyhydroxyde d'aluminium AIO(OH) lithié et/ou au moins un hydroxyde d'aluminium $Al(OH)_3$ lithié, l'au moins une colonne étant interconnectée en boucle fermée, les points d'alimentation et de soutirage de l'au moins une colonne étant décalés au cours du temps d'une valeur correspondant à une quantité de solide adsorbant prédéterminée avec une période de permutation et déterminant une pluralité de zones de fonctionnement de la colonne, et notamment les zones principales suivantes désignées par définition par un numéro :

  - une zone I de désorption de lithium comprise entre un point d'injection du désorbant et un point de soutirage de l'extrait ;

  - une zone II de désorption de métaux alcalins autres que du lithium et/ou de métaux alcalino-terreux comprise entre le point de soutirage de l'extrait et un point d'injection de la charge comprenant du lithium ;

  - une zone III d'adsorption du lithium comprise entre le point d'injection de la charge et un point de soutirage du raffinat ; et

- une zone IV est comprise entre le point de soutirage du raffinat et le point d'injection du désorbant.

Selon un ou plusieurs modes de réalisation, l'au moins une colonne comprend une pluralité de colonnes ou adsorbeurs interconnectés en boucle fermée, les points d'alimentation et de soutirage des colonnes ou adsorbeurs étant décalés au cours du temps d'une valeur correspondant à une colonne ou un adsorbeur.
Selon un ou plusieurs modes de réalisation, la pluralité de colonnes ou adsorbeurs comprend au moins 4 colonnes ou adsorbeurs, préférablement entre 4 et 24 colonnes ou adsorbeurs, préférablement entre 8 et 21 colonnes ou adsorbeurs, par exemple entre 12 et 15 colonnes ou adsorbeurs.
Selon un ou plusieurs modes de réalisation, le solide adsorbant est réparti dans les zones I à IV selon des configurations dites de type a / b / c / d, c'est-à-dire que la répartition du solide adsorbant, par rapport à la quantité totale de solide adsorbant, est la suivante :

- a est la quantité de solide adsorbant en zone I ;
- b est la quantité de solide adsorbant en zone II ;
- c est la quantité de solide adsorbant en zone III ; et
- d est la quantité de solide adsorbant en zone IV,

procédé dans lequel :

-

$$a = 43\% \pm 9\% \; ;$$

-

$$b = 29\% \pm 6\% \; ;$$

-

$$c = 14\% \pm 3\% \; ;$$

et
-

$$d = 14\% \pm 3\%.$$

Selon un ou plusieurs modes de réalisation, l'au moins une colonne comprend une pluralité de lits de solide adsorbant interconnectés en boucle fermée et séparés par des plateaux, les points d'alimentation et de soutirage dans les plateaux de la colonne étant décalés au cours du temps d'une valeur correspondant à un lit d'adsorbant.
Selon un ou plusieurs modes de réalisation, l'au moins une colonne comprend au moins 4 lits de solide adsorbant, préférablement entre 4 et 24 lits de solide adsorbant, préférablement entre 8 et 21 lits de solide adsorbant, par exemple entre 12 et 15 lits de solide adsorbant.
Selon un ou plusieurs modes de réalisation, les lits de solide adsorbant sont répartis dans les zones I à IV selon des configurations dites de type a / b / c / d, c'est-à-dire que la répartition des lits de solide adsorbant est la suivante :

- a est le nombre de lits en zone I ;
- b est le nombre de lits en zone II ;
- c est le nombre de lits en zone III ; et
- d est le nombre de lits en zone IV,

procédé dans lequel :

-

$$a = (t * 0{,}43) * (1 \pm 0{,}20) \; ;$$

- 

$$b = (t * 0, 29) * (1 \pm 0,20) \;;$$

- 

$$c = (t * 0,14) * (1 \pm 0,20) \;;$$

et

- 

$$d = (t * 0,14) * (1 \pm 0,20),$$

procédé dans lequel (le nombre de lits) t est un nombre entier naturel compris entre 4 et 24, préférablement entre 8 et 21, par exemple entre 12 et 15 lits de solide adsorbant.

Selon un ou plusieurs modes de réalisation, on alimente une partie de l'extrait ou un flux obtenu par concentration et/ou purification dudit extrait dans la zone II, préférablement dans une partie centrale de la zone II, très préférablement sensiblement au milieu de de la zone II, notamment afin d'améliorer la concentration de l'extrait.

Selon un ou plusieurs modes de réalisation, le solide adsorbant comprend et de préférence consiste en de la bayérite lithiée et/ou de la boehmite lithiée.

Selon un ou plusieurs modes de réalisation, le solide adsorbant comprend entre 0,1 % poids et 5% poids d'élément lithium, préférablement sous la forme de LiCl, par rapport au poids total du solide adsorbant.

Selon un ou plusieurs modes de réalisation, le solide adsorbant comprend et de préférence consiste en un matériau solide de formule $(LiCl)_x.2Al(OH)_3,nH_2O$, dans lequel n est compris entre 0,01 et 10, et x est compris entre 0,4 et 1.

Selon un ou plusieurs modes de réalisation, le désorbant est choisi dans le groupe constitué par l'eau, de l'eau lithiée, une saumure, de manière préférée l'eau.

Selon un ou plusieurs modes de réalisation, le désorbant comprend entre 0 g/L et 1 g/L d'élément lithium, préférablement sous la forme de LiCl, par rapport au poids total du désorbant.

Selon un ou plusieurs modes de réalisation, la charge comprend au moins 0,1 g/L poids d'élément lithium, préférablement sous la forme de LiCl, par rapport au poids total de la charge.

Selon un ou plusieurs modes de réalisation, les étapes du procédé sont effectuées à une température (e.g. température dans le solide adsorbant) comprise entre 0°C et 120°C et de manière préférée entre 5°C et 100°C, de manière particulièrement préférée entre 15°C et 80°C, très préférablement entre 40°C et 80°C, notamment afin de favoriser un perçage accéléré du solide adsorbant.

Avantageusement, les étapes du procédé sont effectuées à une pression (e.g. pression dans le solide adsorbant) contrôlée de manière à ce que l'on reste en phase liquide en tout point du procédé selon l'invention. Selon un ou plusieurs modes de réalisation, la pression dans les lits de solide adsorbant est comprise entre 0,09 MPa et 5 MPa, de préférence entre 0,095 MPa et 3,5 MPa, préférablement entre 0,1 MPa et 2,5 MPa.

Selon un ou plusieurs modes de réalisation, la durée du cycle est d'au moins 20 min, préférablement au moins 40 min, telle que comprise entre 1 heure et 10 heures. Préférablement, la durée du cycle est comprise entre 2 heures et 8 heures.

Selon un ou plusieurs modes de réalisation, le ratio débit volumique du désorbant sur le débit volumique de la charge est inférieur à 1, de préférence inférieur à 0,5, préférablement inférieur à 0,2, très préférablement inférieur à 0,1.

Selon un ou plusieurs modes de réalisation, le ratio débit volumique du désorbant sur le débit volumique de la charge est compris entre 0,01 et 1,0, préférablement entre 0,02 et 0,5, très préférablement entre 0,06 et 0,1.

Selon un deuxième aspect, les objets précités, ainsi que d'autres avantages, sont obtenus par un dispositif d'extraction par adsorption de lithium en lit mobile simulé comprenant les éléments suivants :

- au moins une colonne adaptée pour être alimentée avec au moins une charge comprenant du lithium et un désorbant, et être soutirée d'au moins un extrait et au moins un raffinat de la colonne, l'au moins une colonne comprenant un solide adsorbant comprenant au moins un oxyhydroxyde d'aluminium AlO(OH) lithié et/ou au moins un hydroxyde d'aluminium $Al(OH)_3$ lithié, l'au moins une colonne étant interconnectée en boucle fermée, les points d'alimentation et de soutirage de l'au moins une colonne étant décalés au cours du temps d'une valeur correspondant à une quantité de solide adsorbant prédéterminée avec une période de permutation et déterminant une pluralité de zones de fonctionnement de la colonne, et notamment les zones principales suivantes désignées par définition par un numéro :

- une zone I de désorption de lithium comprise entre un point d'injection du désorbant et un point de soutirage de l'extrait ;

- une zone II de désorption de métaux alcalins autres que du lithium et/ou de métaux alcalino-terreux comprise entre le point de soutirage de l'extrait et un point d'injection de la charge comprenant du lithium ;

- une zone III d'adsorption du lithium comprise entre le point d'injection de la charge et un point de soutirage du raffinat ; et

- une zone IV est comprise entre le point de soutirage du raffinat et le point d'injection du désorbant.

D'autres caractéristiques et avantages de l'invention selon les aspects précités, apparaîtront à la lecture de la description ci-après et d'exemples non limitatifs de réalisations, en se référant aux figures annexées et décrite ci-après.

**Liste des figures**

La figure 1 représente un procédé d'extraction par adsorption de lithium en lit mobile simulé selon l'invention, utilisant une pluralité de colonnes ou adsorbeurs.

La figure 2 représente un procédé d'extraction par adsorption de lithium en lit mobile simulé selon l'invention, utilisant une seule colonne comprenant une pluralité de lits de solide adsorbant séparés par des plateaux.

La figure 3 montre le profil de concentration calculé le long d'une colonne d'extraction par adsorption de lithium en lit mobile simulé selon l'invention.

**Description des modes de réalisation**

Des modes de réalisation du dispositif et du procédé selon les aspects précités vont maintenant être décrits en détail. Dans la description détaillée suivante, de nombreux détails spécifiques sont exposés afin de fournir une compréhension plus approfondie du dispositif et du procédé. Cependant, il apparaîtra à l'homme du métier que le dispositif et le procédé peuvent être mis en oeuvre sans ces détails spécifiques. Dans d'autres cas, des caractéristiques bien connues n'ont pas été décrites en détail pour éviter de compliquer inutilement la description.

Dans la présente demande, le terme « comprendre » est synonyme de (signifie la même chose que) « inclure » et « contenir », et est inclusif ou ouvert et n'exclut pas d'autres éléments non récités. Il est entendu que le terme « comprendre » inclut le terme exclusif et fermé « consister ». En outre, dans la présente description, les termes « essentiellement » ou « sensiblement » correspondent à une approximation de $\pm$ 30%, préférablement de $\pm$20%, très préférablement de $\pm$ 10%.

La présente invention concerne un procédé d'extraction par adsorption de lithium mettant en œuvre un procédé de séparation par chromatographie à contre-courant simulé ou lit mobile simulé, que nous désignerons ci-après globalement par l'appellation de procédé « LMS ». Le procédé d'extraction par adsorption de lithium par chromatographie à contre-courant simulé ou lit mobile simulé de la présente demande peut mettre en œuvre un déplacement synchrone des conduites d'entrée/sortie, mais peut également mettre en œuvre un déplacement non synchrone des vannes d'entrée/sortie dans un système multicolonne, ce dernier cas étant également connu sous le nom de VARICOL. En particulier, le séquençage de points d'injection et de collecte a lieu sur un cycle de fonctionnement du dispositif. Par la suite, la durée de cycle désigne le temps au bout duquel les points d'injection et de collecte ont été séquencés jusqu'à revenir à la position initiale dans le dispositif. Au bout d'un cycle, le dispositif est à nouveau à sa configuration initiale. Selon un ou plusieurs modes de réalisation, un cycle comporte autant de périodes que de colonnes ou de lits de solide adsorbant dans la boucle de séparation. Par exemple, un cycle d'un procédé « LMS » selon l'invention comprenant 8 colonnes ou 8 lits de solide adsorbant est produit de 8 périodes.

Selon l'invention, le procédé et le dispositif LMS utilise / comprend au moins une colonne (ou adsorbeurs), la ou les colonnes étant disposée(s) en série et mettant en œuvre un écoulement de fluides dans un milieu de particules solides, appelé solide adsorbant ou milieu granulaire, selon un sens d'écoulement du ou des fluides mis en œuvre dans la ou les colonnes. Le fluide traversant successivement la ou les colonne(s) $C_i$ est appelé fluide principal pour le distinguer d'autres fluides secondaires qui peuvent être ajoutés au fluide principal par l'intermédiaire d'un dispositif de distribution et de collecte (e.g. systèmes de vannes externe à la ou les colonne(s)), généralement situé en entrée ou sortie de colonne, par exemple entre deux colonnes successives.

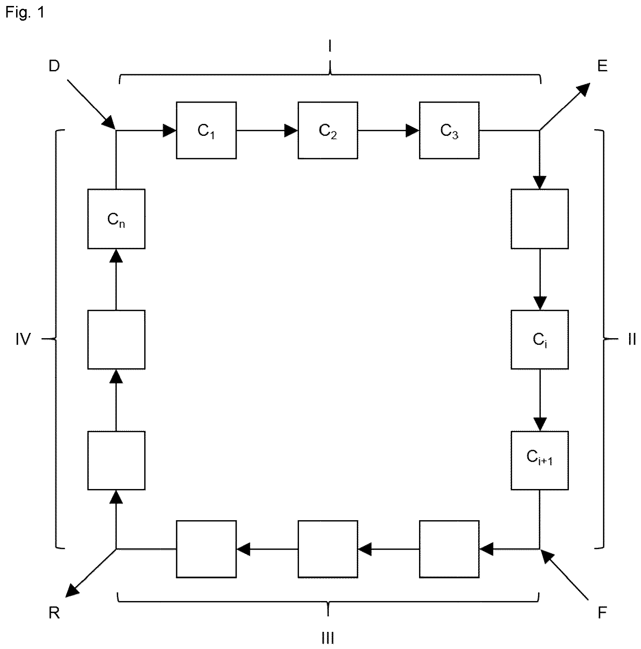

En référence à la figure 1, selon un ou plusieurs modes de réalisation, le procédé et le dispositif selon l'invention utilise / comprend une pluralité n de colonnes $C_i$ (i.e., de la colonne $C_1$ à colonne $C_n$) séparées par N dispositifs de distribution (de la charge F et du désorbant D) et de collecte (de l'extrait E et du raffinat R). Préférablement, le nombre n de colonnes $C_i$ et le nombre N de dispositifs de distribution et de collecte sont identiques. Selon un ou plusieurs modes de réalisation, n est supérieur ou égal à 4. Selon un ou plusieurs modes de réalisation, n est compris entre 4 et 24, préférablement entre 8 et 21, e.g. entre 12 et 15. Selon un ou plusieurs modes de réalisation, N est supérieur ou égal à 4. Selon un ou plusieurs modes de réalisation, N est compris entre 4 et 24, préférablement entre 8 et 21, e.g. entre 12 et 15.

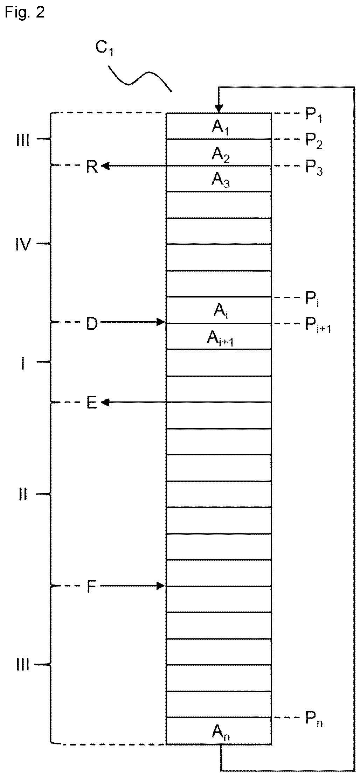

En référence à la figure 2, le procédé et le dispositif LMS utilise / comprend une colonne $C_1$ mettant en œuvre l'écoulement de fluides dans une pluralité de lits de solide adsorbant Ai disposés en série selon un sens d'écoulement du ou des fluides mis en œuvre dans la colonne. Le fluide traversant successivement les lits de solide adsorbant Ai est appelé fluide principal pour le distinguer des fluides secondaires qui peuvent être ajoutés au fluide principal par l'intermédiaire d'un dispositif de distribution et de collecte, appelé également plateau Pi, généralement situé entre deux lits de solide adsorbant Ai successifs.

Un plateau Pi comprend au moins une zone de collecte et un système de vannes permettant de collecter du fluide principal et/ou d'injecter des fluides secondaires et de mélanger ces fluides secondaires avec le fluide principal. Un plateau comprend également au moins une zone de distribution qui a pour but de répartir le fluide résultant du mélange du fluide principal et des fluides secondaires sur le lit granulaire situé immédiatement en aval, au sens de l'écoulement du fluide principal.

En référence à la figure 2, une colonne est divisée en une pluralité de plateaux Pi et de lits de solide adsorbant Ai, le plateau Pi étant disposé directement en amont du lit d'adsorbant Ai, dans le sens de l'écoulement du fluide principal. En outre, on parle de lit d'adsorbant Ai+1 pour désigner le lit d'adsorbant suivant situé en aval du lit d'adsorbant Ai, dans le sens de l'écoulement du fluide principal. De la même manière, un plateau Pi+1 désigne le plateau suivant situé en aval du plateau Pi, dans le sens de l'écoulement du fluide principal.

Selon un ou plusieurs modes de réalisation, le procédé et le dispositif selon l'invention utilise / comprend au moins une colonne $C_i$ de séparation divisée en n lits de solide adsorbant $A_i$ séparés par N plateaux (définissant des zones inter-lits), chaque plateau pouvant être luimême divisé en plusieurs secteurs ou régions, dénommées panneaux. Préférablement, le nombre n de lits de solide adsorbant $A_i$ et le nombre N de plateaux $P_i$ sont identiques. Selon un ou plusieurs modes de réalisation, n est supérieur ou égal à 4. Selon un ou plusieurs modes de réalisation, n est compris entre 4 et 24, préférablement entre 8 et 21, e.g. entre 12 et 15. Selon un ou plusieurs modes de réalisation, N est compris entre 4 et 24, préférablement entre 8 et 21, e.g. entre 12 et 15.

Dans la suite du texte, on parle d'étape pour désigner une opération ou un groupe d'opérations similaires effectuées sur un flux donné en un certain point du procédé. On décrit le procédé dans ses différentes étapes prises dans l'ordre d'écoulement des flux ou des produits.

Le procédé d'extraction par adsorption de lithium en lit mobile simulé selon l'invention comprend l'étape suivante :

- on alimente une ou plusieurs colonne(s) $C_i$ avec au moins une charge F comprenant du lithium et un désorbant D, et on soutire au moins un extrait E et au moins un raffinat R de la colonne $C_i$, la ou les colonne(s) $C_i$ comprenant un solide adsorbant comprenant au moins un oxyhydroxyde d'aluminium AlO(OH) lithié et/ou au moins un hydroxyde d'aluminium $Al(OH)_3$ lithié.

En référence à la figure 1, selon un ou plusieurs modes de réalisation, le solide adsorbant est réparti dans une pluralité de colonnes $C_i$ (e.g. adsorbeurs).

En référence à la figure 2, selon un ou plusieurs modes de réalisation, le solide adsorbant est réparti dans des lits de solide adsorbant $A_i$ d'au moins une colonne $C_i$, les lits de solide adsorbant $A_i$ étant séparés par des plateaux $P_i$.

Selon l'invention, l'au moins une colonne $C_i$ est interconnectée en boucle fermée, les points d'alimentation et de soutirage de la ou les colonne(s) $C_i$ étant décalés au cours du temps (par exemple d'une valeur correspondant à une colonne (e.g. adsorbeur) ou un lit d'adsorbant d'une colonne) avec une période de permutation et déterminant une pluralité de zones de fonctionnement de la ou les colonne(s) $C_i$, et notamment les zones principales suivantes désignées par définition par un numéro :

- une zone I de désorption de lithium comprise entre un point d'injection du désorbant D et un point de soutirage de l'extrait E ;

- une zone II de désorption de métaux alcalins autres que du lithium et/ou de métaux alcalino-terreux comprise entre le point de soutirage de l'extrait E et un point d'injection de la charge F comprenant du lithium ;

- une zone III d'adsorption du lithium comprise entre le point d'injection de la charge F et un point de soutirage du raffinat R ; et

- une zone IV est comprise entre le point de soutirage du raffinat R et le point d'injection du désorbant D ;

En référence à la figure 1, selon un ou plusieurs modes de réalisation, les points d'alimentation et de soutirage des colonnes $C_i$ sont décalés au cours du temps d'une valeur correspondant à une colonne $C_i$ (e.g. un adsorbeur).

En référence à la figure 2, selon un ou plusieurs modes de réalisation, les points d'alimentation et de soutirage de l'au moins une colonne $C_i$ sont décalés au cours du temps d'une valeur correspondant à un lit d'adsorbant $A_i$.

Avantageusement, le procédé selon l'invention permet la séparation du lithium des métaux alcalins, de préférence le sodium (Na), et le potassium (K) et des alcalino-terreux, de préférence le magnésium (Mg), le calcium (Ca) et le strontium (Sr), présents en quantité importante dans les solutions salines traitées dans ledit procédé d'extraction. Le procédé selon l'invention permet également la séparation sélective du lithium des autres composés tels que le bore et les sulfates.

En particulier, le procédé selon l'invention permet de produire un extrait concentré en lithium par rapport aux procédés classiques. Un facteur de concentration en lithium supérieur à 10 entre la charge et l'extrait est atteignable par le procédé selon l'invention alors que les procédés classiques plafonnent à 3 ou 4. Le contre-courant pratiqué par le procédé selon l'invention permet une zone d'accumulation avantageuse pour concentrer le lithium dans l'extrait.

Selon un ou plusieurs modes de réalisation, l'au moins une colonne $C_i$ comprend une pluralité de colonnes ou adsorbeurs interconnectés en boucle fermée. Selon un ou plusieurs modes de réalisation, les points d'alimentation et de soutirage des colonnes $C_i$ ou adsorbeurs sont décalés au cours du temps d'une valeur correspondant à une colonne ou un bison. Selon un ou plusieurs modes de réalisation la pluralité de colonnes $C_i$ ou adsorbeurs comprend au moins 4 colonnes ou adsorbeurs, préférablement entre 4 et 24 colonnes ou adsorbeurs, préférablement entre 8 et 21 colonnes ou adsorbeurs, e.g. entre 12 et 15 colonnes ou adsorbeurs.

Selon un ou plusieurs modes de réalisation, le solide adsorbant est réparti dans les zones I à IV selon des configurations dites de type a / b / c / d, c'est-à-dire que la répartition du solide adsorbant, par rapport à la quantité totale de solide adsorbant, est la suivante :

- a est la quantité de solide adsorbant en zone I ;

- b est la quantité de solide adsorbant en zone II ;

- c est la quantité de solide adsorbant en zone III ; et

- d est la quantité de solide adsorbant en zone IV,

procédé dans lequel :

-

$$a = 43\% \pm 9\%,$$

préférablement $\pm$ 6%, très préférablement $\pm$ 3% ;

-

$$b = 29\% \pm 6\%,$$

préférablement $\pm$ 4%, très préférablement $\pm$ 2% ;

-

$$c = 14\% \pm 3\%,$$

préférablement $\pm$ 2%, très préférablement $\pm$ 1% ; et

-

$$d = 14\% \pm 3,$$

préférablement $\pm$ 2%, très préférablement $\pm$ 1%.

Selon un ou plusieurs modes de réalisation, l'au moins une colonne $C_i$ comprend une pluralité de lits de solide adsorbant $A_i$ interconnectés en boucle fermée et séparés par des plateaux $P_i$, les points d'alimentation et de soutirage dans les plateaux $P_i$ de la colonne $C_i$ étant décalés au cours du temps d'une valeur correspondant à un lit d'adsorbant. Selon un ou plusieurs modes de réalisation, l'au moins une colonne $C_i$ comprend entre 4 et 24 lits de solide adsorbant $A_i$, préférablement entre 8 et 21 lits de solide adsorbant $A_i$. e.g. entre 8 et 21 lits de solide adsorbant $A_i$.

Selon un ou plusieurs modes de réalisation, les lits de solide adsorbant $A_i$ sont répartis dans les zones I à IV selon des configurations dites de type a / b / c / d, c'est-à-dire que la répartition des lits de solide adsorbant $A_i$ est la suivante :

- a est le nombre de lits en zone I ;
- b est le nombre de lits en zone II ;
- c est le nombre de lits en zone III ; et
- d est le nombre de lits en zone IV,

procédé dans lequel :

-

$$a = (t * 0,43) * (1 \pm 0,20, \text{préférablement } 1 \pm 0,10, \text{très préférablement } 1 \pm 0,05) ;$$

-

$$b = (t * 0,29) * (1 \pm 0,20, \text{préférablement } 1 \pm 0,10, \text{très préférablement } 1 \pm 0,05) ;$$

-

$$c = (t * 0,14) * (1 \pm 0,20, \text{préférablement } 1 \pm 0,10, \text{très préférablement } 1 \pm 0,05) ;$$

et

-

$$d = (t * 0,14) * (1 \pm 0,20, \text{préférablement } 1 \pm 0,10, \text{très préférablement } 1 \pm 0,05),$$

procédé dans lequel t est un nombre entier naturel compris entre 4 et 24, préférablement entre 8 et 21, tel qu'entre 12 et 15.

Selon un ou plusieurs modes de réalisation, la température est réglée de manière à ce que l'on reste à une température dans le solide adsorbant comprise entre 0°C et 120°C et de manière préférée entre 5°C et 100°C, de manière particulièrement préférée entre 15°C et **80°C, très** préférablement entre 40°C et 80°C, notamment afin de favoriser un perçage accéléré du solide adsorbant.

Avantageusement, la pression est réglée de manière à ce que l'on reste en phase liquide en tout point du procédé selon l'invention. Selon un ou plusieurs modes de réalisation, la pression dans le solide adsorbant est comprise entre 0,09 MPa et 5 MPa, de préférence entre 0,095 MPa et 3,5 MPa, préférablement entre 0,1 MPa et 2,5 MPa.

Selon un ou plusieurs modes de réalisation, on alimente une partie de l'extrait E ou un flux obtenu par concentration et/ou purification dudit extrait, dans la zone II, préférablement dans une partie centrale de la zone II, très préférablement sensiblement au milieu de de la zone II, notamment afin d'améliorer la concentration de l'extrait. Dans la présente demande, le terme *« sensiblement au milieu de la zone II, »* la zone II comprenant une quantité X de solide adsorbant, correspond à une position disposée entre 0,35*X et 0,65*X de solide adsorbant, préférablement entre 0,40*X et 0,60*X de solide adsorbant, très préférablement entre 0,45*X et 0,55*X de solide adsorbant.

Selon un ou plusieurs modes de réalisation, on alimente au moins 1% de l'extrait E ou un flux obtenu par concentration et/ou purification dudit extrait, préférablement au moins 5% de l'extrait E ou un flux obtenu par concentration et/ou purification dudit extrait, très préférablement au moins 10% de l'extrait E ou un flux obtenu par concentration et/ou purification dudit extrait, dans la zone II. Selon un ou plusieurs modes de réalisation, on alimente entre 5% et 20% de l'extrait E ou un flux obtenu par concentration et/ou purification dudit extrait, dans la zone II.

Selon un ou plusieurs modes de réalisation, la durée du cycle est d'au moins 20 min, de préférence au moins 40 min, telle que comprise entre 1 heure et 10 heures. Préférablement, la durée du cycle employée est comprise entre 2 heures et 8 heures. La durée du cycle correspond la période de permutation ST (période entre deux permutations successives des alimentations/extractions) multipliée par le nombre total de points d'injection/soutirage, tel que le nombre total de colonnes $C_i$ utilisées (voir exemple de la figure 1) ou de lits de solide adsorbant $A_i$ utilisés (voir exemple de la figure 2).

Selon un ou plusieurs modes de réalisation, le taux de recyclage (i.e. ratio du débit de recyclage moyen (moyenne des débits de zones pondérée du nombre de colonnes ou de lits de solide adsorbant par zones) sur le débit de charge) est compris entre 2 et 12, de préférence entre 3 et 9, très préférablement entre 5 et 8.

Selon un ou plusieurs modes de réalisation, le ratio débit volumique du désorbant sur le débit volumique de la charge est inférieur à 1, de préférence inférieur à 0,5, préférablement inférieur à 0,2, très préférablement inférieur à 0,1. Selon un ou plusieurs modes de réalisation, le ratio débit volumique du désorbant sur le débit volumique de la charge est compris entre 0,01 et 1,0, préférablement entre 0,02 et 0,5, très préférablement entre 0,06 et 0,1.

Selon un ou plusieurs modes de réalisation, le procédé selon l'invention comprend avantageusement une étape d'activation du solide adsorbant. Ladite étape d'activation permet d'activer les sites destinés à adsorber sélectivement le lithium. De préférence, ladite étape d'activation est avantageusement réalisée par le passage d'une solution d'activation choisie parmi l'eau et une solution de sel de lithium ayant une concentration comprise entre 0,001 mol/L et 0,1 mol/L, de préférence entre 0,001 mol/L et 0,05 mol/L et de manière préférée entre 0,01 et 0,04 mol/L. De manière préférée, le sel de lithium utilisé en solution dans ladite étape d'activation est choisi parmi le chlorure de lithium (LiCl), le nitrate de lithium et le bromure de lithium. De manière très préférée, le sel de lithium utilisé en solution dans ladite étape d'activation est le chlorure de lithium (LiCl). Selon un ou plusieurs modes de réalisation, ladite étape d'activation est réalisée à une température comprise entre 0°C et 90°C, et de préférence entre 10°C et 60°C, et de manière préférée entre 10°C et 30°C avec un temps de séjour de ladite solution d'activation dans la colonne de préférence compris entre 0,03 et 10 h, et de préférence entre 0,06 et 1 h. Selon un ou plusieurs modes de réalisation, le volume de solution d'activation est compris entre 1 et 30 fois, de préférence entre 2 et 20 fois, le volume total d'adsorbant.

Le dispositif d'extraction par adsorption de lithium en lit mobile simulé comprend les éléments suivants :

- au moins une colonne ($C_i$) adaptée pour être alimentée avec au moins une charge comprenant du lithium et un désorbant, et être soutirée d'au moins un extrait et au moins un raffinat de la colonne ($C_i$), l'au moins une colonne ($C_i$) comprenant un solide adsorbant comprenant au moins un oxyhydroxyde d'aluminium AlO(OH) lithié et/ou au moins un hydroxyde d'aluminium $Al(OH)_3$ lithié, l'au moins une colonne ($C_i$) étant interconnectée en boucle fermée, les points d'alimentation et de soutirage de l'au moins une colonne ($C_i$) étant décalés au cours du temps d'une valeur correspondant à une quantité de solide adsorbant prédéterminée avec une période de permutation et déterminant la pluralité de zones I, II, III et IV telles que définies ci-dessus.

Selon un ou plusieurs modes de réalisation, les points d'alimentation et de soutirage de l'au moins une colonne ($C_i$) sont décalés de manière synchrone.

Selon un ou plusieurs modes de réalisation, les points d'alimentation et de soutirage de l'au moins une colonne ($C_i$) sont décalés de manière asynchrone. Dans ce cas, la durée de cycle désigne le temps au bout duquel les points d'injection et de collecte ont été séquencés jusqu'à revenir à la position initiale dans le dispositif. La quantité de solide adsorbant contenue dans chacune des zones I, II, III et IV telles que définies ci-dessus est alors calculée comme étant la quantité moyenne de solide adsorbant contenue respectivement dans chacune des zones sur la durée du cycle. De la même manière le nombre de lits dans chacune des zones I, II, III et IV telles que définies ci-dessus est calculé comme étant le nombre moyen de lits adsorbant contenu respectivement dans chacune des zones sur la durée du cycle, cette valeur pouvant être non entière.

Selon un ou plusieurs modes de réalisation, la charge comprend et de préférence consiste en une solution (saline) contenant du lithium et pouvant être saturée en sels ou non, telle qu'une saumure.

Selon un ou plusieurs modes de réalisation, la charge comprend au moins un des éléments suivants : Na, K, Rb, Cs, Mg, Ca, Sr, Ba, F, Cl, Br, I, $SO_4$, $CO_3$, $NO_3$, B et $HCO_3$.

Ladite la charge peut être toute solution saline naturelle, concentrée ou issue d'un procédé d'extraction ou de transformation du lithium. Par exemple, ladite solution saline utilisée dans le procédé d'extraction selon l'invention peut avantageusement être choisie parmi les saumures de lacs salés ou de sources géothermales, les saumures soumises à une évaporation pour obtenir des saumures concentrées en lithium, l'eau de mer, les effluents des usines de production de chlorure ou d'hydroxyde de lithium et les effluents des procédés d'extraction du lithium à partir de minéraux.

Selon un ou plusieurs modes de réalisation, la charge comprend au moins 0,1 g/L poids d'élément lithium, préférablement sous la forme de LiCl, par rapport au poids total de la charge. Selon un ou plusieurs modes de réalisation, la charge comprend entre 0,1 g/L et 1 g/L d'élément lithium, préférablement sous la forme de LiCl, par rapport au poids total de la charge.

Selon un ou plusieurs modes de réalisation, le désorbant est choisi dans le groupe constitué par l'eau, de l'eau lithiée, une saumure, de manière préférée l'eau. Selon un ou plusieurs modes de réalisation, le désorbant comprend entre 0 g/L et 1 g/L d'élément lithium, préférablement sous la forme de LiCl, par rapport au poids total du désorbant. Selon un ou plusieurs modes de réalisation, le désorbant comprend moins de 0,05 g/L d'élément lithium, préférablement moins de 0,01 g/L d'élément lithium, par rapport au poids total du désorbant.

Selon un ou plusieurs modes de réalisation, l'au moins un oxyhydroxyde d'aluminium AlO(OH) lithié comprend de la boehmite lithiée. Selon un ou plusieurs modes de réalisation, l'au moins un oxyhydroxyde d'aluminium AlO(OH) lithié comprend au moins 60% poids, préférablement au moins 80% poids, de boehmite lithiée, par rapport au poids total de l'au moins un oxyhydroxyde d'aluminium AlO(OH) lithié. Selon un ou plusieurs modes de réalisation, l'au moins un oxyhydroxyde d'aluminium AlO(OH) lithié consiste en de la boehmite lithiée.

Selon un ou plusieurs modes de réalisation, l'au moins un hydroxyde d'aluminium $Al(OH)_3$ lithié comprend de la bayérite lithiée. Selon un ou plusieurs modes de réalisation, l'au moins un hydroxyde d'aluminium $Al(OH)_3$ lithié comprend au moins 60% poids, préférablement au moins 80% poids, de bayérite lithiée, par rapport au poids total de l'au moins un hydroxyde d'aluminium $Al(OH)_3$ lithié. Selon un ou plusieurs modes de réalisation, l'au moins un hydroxyde d'aluminium $Al(OH)_3$ lithié consiste en de la bayérite lithiée.

Selon un ou plusieurs modes de réalisation, le solide adsorbant comprend au moins 0,1% poids d'élément lithium (préférablement sous la forme de LiCl), préférablement au moins 1% poids, très préférablement au moins 1,5% poids, par rapport au poids total du solide adsorbant. Selon un ou plusieurs modes de réalisation, le solide adsorbant comprend entre 0,1% poids et 5% poids d'élément lithium (préférablement sous la forme de LiCl), préférablement entre 1 % poids et 4% poids, très préférablement entre 1,5 % poids et 3% poids, par rapport au poids total du solide adsorbant.

Selon un ou plusieurs modes de réalisation, le solide adsorbant comprend et de préférence consiste en un matériau solide de formule $(LiCl)_x.2Al(OH)_3,nH_2O,$ dans lequel n est compris entre 0,01 et 10, et x est compris entre 0,4 et 1. Selon un ou plusieurs modes de réalisation, n est compris entre 0,1 et 5, préférablement entre 0,1 et 1, très préférablement entre 0,1 et 0,5.

Selon un ou plusieurs modes de réalisation, le solide adsorbant présente une surface spécifique caractérisée par adsorption d'azote selon la méthode BET comprise entre 1 $m^2/g$ et 30 $m^2/g$, préférablement entre 1 $m^2/g$ et 20 $m^2/g$.

Selon un ou plusieurs modes de réalisation, le solide adsorbant se présente sous forme de billes ou d'extrudés de forme cylindrique, cylindre creux, roue de charrette, trilobés ou multilobés ou toute autre forme géométrique utilisée par l'homme du métier. Selon un ou plusieurs modes de réalisation, le solide adsorbant se présente sous forme de billes de diamètre moyen compris entre 0,1 et 1,5 mm, de préférence compris entre 0,1 et 1 mm, de manière plus préférée compris entre 0,1 et 0,3 mm. Selon un ou plusieurs modes de réalisation, le solide adsorbant se présente sous forme d'extrudés de diamètre compris entre 0,15 et 5 mm, de préférence compris entre 0,2 et 3 mm, de manière plus préférée compris entre 0,25 et 1,8 mm.

Le matériau solide adsorbant est caractérisé selon les techniques suivantes : l'adsorption d'azote pour la détermination de la surface spécifique selon la méthode BET (e.g. norme ASTM D 3663-7) ; la fluorescence X pour l'analyse élémentaire. Le diamètre moyen des extrudés est mesuré par la mesure optique d'au moins 10 extrudés, de préférence d'au moins 50 extrudés. Par exemple lorsque l'adsorbant solide est sous forme de billes, l'estimation du diamètre moyen en nombre du solide adsorbant est effectué à l'aide d'une analyse de la distribution granulométrique d'un échantillon d'au moins 50 billes d'adsorbant par imagerie selon la norme ISO 13322 - 2 : 2006 en utilisant un tapis roulant permettant à l'échantillon de passer devant l'objectif de la caméra. Le diamètre moyen en nombre est ensuite calculé à partir de la distribution granulométrique en appliquant la norme ISO 9276-2:2001.

**Exemples:**

*Exemple 1 (conforme à l'invention) : Séparation d'une saumure avec contre-courant simulé.*

Le procédé selon l'invention est appliqué pour la purification et la séparation d'une saumure de lithium de la composition suivante :

- 0,4 g/L en élément lithium ;

- 110 g/L en élément chlore ;

- 70 g/L en élément sodium.

Le solide adsorbant considéré pour la séparation est une bayérite lithiée.
Le procédé utilise une colonne $C_1$ comprenant 21 lits de solide adsorbant $A_i$ répartis comme suit :

- 9 lits en zone 1 ;

- 6 lits en zone 2 ;

- 3 lits en zone 3 ;

- 3 lits en zone 4.

La séparation a lieu à 20 °C. Le désorbant est de l'eau ne contenant pas d'élément lithium. Le rapport des débits désorbant/charge est égal à 0,08 et le taux de recyclage moyen est de 7,3. La vitesse superficielle en zone 3 est de 0,5 cm/s.

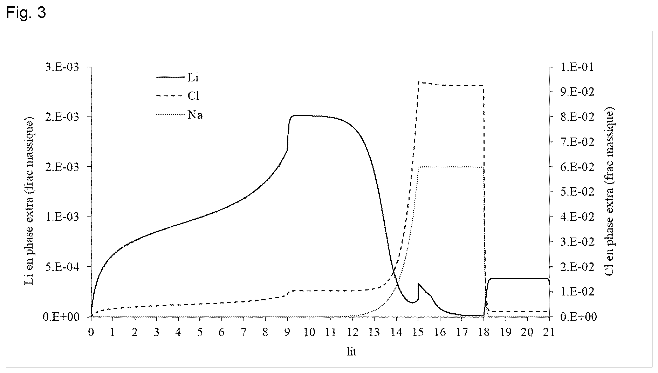

Les performances du procédé sont calculées par simulation. Les données thermodynamiques et de transfert de matière ont été au préalable obtenues par des essais de perçage, tel que couramment pratiqué par l'homme du métier. Le profil de concentration calculé le long du lit mobile simulé est présenté en Figure 3.

Les résultats indiquent une concentration à l'extrait de 4,4 g/L, soit un facteur de concentration égal à 11. Cette concentration élevée réduit fortement les équipements et la consommation énergétique nécessaires à l'évaporation de l'eau dans les étapes avales du procédé.

Par ailleurs la pureté du lithium, défini comme le ratio de la masse de lithium et de la masse cumulée du sodium et du lithium, est de 99,9%.

*Exemple 2 (non-conforme à l'invention) : Séparation d'une saumure sans contre-courant simulé*

Dans l'exemple 2, une saumure identique à l'exemple 1 est séparée par un procédé d'adsorption 20°C sur une bayérite lithiée identique à l'exemple 1. En revanche le procédé mis en place est opéré de manière batch et sans la mise en place d'un contre-courant simulé.

Le produit final présente une concentration finale égal à 1,2 g/L en élément Lithium. Le facteur de concentration obtenu est égal à 3 et est nettement inférieur au cas avec contre-courant simulé.

Le procédé selon l'invention permet la production d'un flux beaucoup plus concentré qu'avec un procédé d'adsorption batch standard.

**Revendications**

1. Procédé d'extraction par adsorption de lithium en lit mobile simulé comprenant l'étape suivante :

   - on alimente au moins une colonne $(C_i)$ avec au moins une charge (F) comprenant du lithium et un désorbant (D), et on soutire au moins un extrait (E) et au moins un raffinat (R) de la colonne $(C_i)$, l'au moins une colonne $(C_i)$ comprenant un solide adsorbant comprenant au moins un oxyhydroxyde d'aluminium AlO(OH) lithié et/ou au moins un hydroxyde d'aluminium $Al(OH)_3$ lithié, l'au moins une colonne $(C_i)$ étant interconnectée en boucle fermée, les points d'alimentation et de soutirage de l'au moins une colonne $(C_i)$ étant décalés au cours du temps d'une valeur correspondant à une quantité de solide adsorbant prédéterminée avec une période de permutation et déterminant une pluralité de zones de fonctionnement de la colonne $(C_i)$, et notamment les zones principales suivantes désignées par définition par un numéro :

      - - une zone I de désorption de lithium comprise entre un point d'injection du désorbant et un point de soutirage de l'extrait ;
      - - une zone II de désorption de métaux alcalins autres que du lithium et/ou de métaux alcalino-terreux comprise entre le point de soutirage de l'extrait et un point d'injection de la charge comprenant du lithium ;
      - - une zone III d'adsorption du lithium comprise entre le point d'injection de la charge et un point de soutirage du raffinat ; et
      - - une zone IV est comprise entre le point de soutirage du raffinat et le point d'injection du désorbant.

2. Procédé selon la revendication 1, dans lequel l'au moins une colonne $(C_i)$ comprend une pluralité de colonnes $(C_i)$ ou adsorbeurs interconnectés en boucle fermée, les points d'alimentation et de soutirage des colonnes $(C_i)$ ou adsorbeurs étant décalés au cours du temps d'une valeur correspondant à une colonne $(C_i)$ ou un adsorbeur.

3. Procédé selon la revendication 1 ou la revendication 2, dans lequel la pluralité de colonnes $(C_i)$ ou adsorbeurs comprend au moins 4 colonnes ou adsorbeurs.

4. Procédé selon l'une quelconque des revendications précédentes, dans lequel le solide adsorbant est réparti dans les zones I à IV selon des configurations dites de type a / b / c / d, c'est-à-dire que la répartition du solide adsorbant, par rapport à la quantité totale de solide adsorbant, est la suivante :

- a est la quantité de solide adsorbant en zone I ;
- b est la quantité de solide adsorbant en zone II ;
- c est la quantité de solide adsorbant en zone III ; et
- d est la quantité de solide adsorbant en zone IV,

procédé dans lequel :

-

$$a = 43\% \pm 9\% \; ;$$

-

$$b = 29\% \pm 6\% \; ;$$

-

$$c = 14\% \pm 3\% \; ;$$

et
-

$$d = 14\% \pm 3\%.$$

5. Procédé selon la revendication 1, l'au moins une colonne ($C_i$) comprend une pluralité de lits de solide adsorbant ($A_i$) interconnectés en boucle fermée et séparés par des plateaux ($P_i$), les points d'alimentation et de soutirage dans les plateaux ($P_i$) de la colonne ($C_i$) étant décalés au cours du temps d'une valeur correspondant à un lit d'adsorbant.

6. Procédé selon la revendication 5, dans lequel l'au moins une colonne ($C_i$) comprend entre 4 et 24 lits de solide adsorbant ($A_i$).

7. Procédé selon la revendication 5 ou la revendication 6, dans lequel les lits de solide adsorbant ($A_i$) sont répartis dans les zones I à IV selon des configurations dites de type a / b / c / d, c'est-à-dire que la répartition des lits de solide adsorbant ($A_i$) est la suivante :

- a est le nombre de lits en zone I ;
- b est le nombre de lits en zone II ;
- c est le nombre de lits en zone III ; et
- d est le nombre de lits en zone IV,
procédé dans lequel :

-

$$a = (t * 0{,}43) * (1 \pm 0{,}20) \; ;$$

-

$$b = (t * 0{,}\, 29) * (1 \pm 0{,}20) \; ;$$

-

$$c = (t * 0{,}14) * (1 \pm 0{,}20) \; ;$$

et
-

$$d = (t * 0{,}14) * (1 \pm 0{,}20),$$

procédé dans lequel t est un nombre entier naturel compris entre 4 et 24.

8. Procédé selon l'une quelconque des revendications précédentes, dans lequel on alimente une partie de l'extrait (E) ou un flux obtenu par concentration et/ou purification dudit extrait (E) dans la zone II.

9. Procédé selon l'une quelconque des revendications précédentes, dans lequel le solide adsorbant comprend de la bayérite lithiée et/ou de la boehmite lithiée.

10. Procédé selon l'une quelconque des revendications précédentes, dans lequel le solide adsorbant comprend entre 0,1 % poids et 5% poids d'élément lithium, par rapport au poids total du solide adsorbant.

11. Procédé selon l'une quelconque des revendications précédentes, dans lequel le solide adsorbant comprend un matériau solide de formule $(LiCl)_x.2Al(OH)_3,nH2O$, dans lequel n est compris entre 0,01 et 10, et x est compris entre 0,4 et 1.

12. Procédé selon l'une quelconque des revendications précédentes, dans lequel la charge (F) comprend au moins 0,1 g/L poids d'élément lithium, par rapport au poids total de la charge.

13. Procédé selon l'une quelconque des revendications précédentes, dans lequel les étapes du procédé sont effectuées à une température comprise entre 0°C et 120°C.

14. Procédé selon l'une quelconque des revendications précédentes, dans lequel le ratio débit volumique du désorbant (D) sur le débit volumique de la charge (F) est inférieur à 1.

15. Dispositif d'extraction par adsorption de lithium en lit mobile simulé comprenant les éléments suivants :

- au moins une colonne $(C_i)$ adaptée pour être alimentée avec au moins une charge (F) comprenant du lithium et un désorbant (D), et être soutirée d'au moins un extrait (E) et au moins un raffinat (R) de la colonne $(C_i)$, l'au moins une colonne $(C_i)$ comprenant un solide adsorbant comprenant au moins un oxyhydroxyde d'aluminium AlO(OH) lithié et/ou au moins un hydroxyde d'aluminium $Al(OH)_3$ lithié, l'au moins une colonne $(C_i)$ étant interconnectée en boucle fermée, les points d'alimentation et de soutirage de l'au moins une colonne $(C_i)$ étant décalés au cours du temps d'une valeur correspondant à une quantité de solide adsorbant prédéterminée avec une période de permutation et déterminant une pluralité de zones de fonctionnement de la colonne $(C_i)$, et notamment les zones principales suivantes désignées par définition par un numéro :

- une zone I de désorption de lithium comprise entre un point d'injection du désorbant et un point de soutirage de l'extrait ;
- une zone II de désorption de métaux alcalins autres que du lithium et/ou de métaux alcalino-terreux comprise entre le point de soutirage de l'extrait et un point d'injection de la charge comprenant du lithium ;
- une zone III d'adsorption du lithium comprise entre le point d'injection de la charge et un point de soutirage du raffinat ; et
- une zone IV est comprise entre le point de soutirage du raffinat et le point d'injection du désorbant.

**Patentansprüche**

1. Verfahren zur Extraktion durch Lithiumadsorption in einem simulierten Fließbett, das den folgenden Schritt umfasst:

- das Zuführen mindestens eines Lithium umfassenden Einsatzmaterials (F) und eines Desorptionsmittels (D) zu mindestens einer Kolonne $(C_i)$ und das Entnehmen mindestens eines Extrakts (E) und mindestens eines Raffinats (R) von der Kolonne $(C_i)$, wobei die mindestens eine Kolonne $(C_i)$ einen adsorbierenden Feststoff umfasst, der mindestens ein lithiumhaltiges Aluminiumoxyhydroxid AlO(OH) und/oder mindestens ein lithium-haltiges Aluminiumhydroxid $Al(OH)_3$ umfasst, die mindestens eine Kolonne $(C_i)$ in einem geschlossenen Kreislauf verbunden ist, die Zufuhr- und Entnahmestellen der mindestens einen Kolonne $(C_i)$ im Zeitverlauf mit einer Permutationsdauer um einen Wert versetzt sind, der einer vorbestimmten Menge des adsorbierenden Feststoffs entspricht, und mehrere Betriebszonen der Kolonne (C$_i$) bestimmt werden und insbesondere die folgenden Hauptzonen definitionsgemäß mit einer Nummer bezeichnet werden:

- eine Zone I zur Desorption von Lithium zwischen einer Stelle zum Einspritzen des Desorptionsmittels und einer Stelle zum Entnehmen des Extrakts;
- eine Zone II zur Desorption von anderen Alkalimetallen als Lithium und/oder Erdalkalimetallen zwischen der Stelle zum Entnehmen des Extrakts und einer Stelle zum Einspritzen des Lithium umfassenden Einsatzmaterials;
- eine Zone III zur Adsorption von Lithium zwischen der Stelle zum Einspritzen des Einsatzmaterials und einer Stelle zum Entnehmen des Raffinats und
- eine Zone IV zwischen der Stelle zum Entnehmen des Raffinats und der Stelle zum Einspritzen des Desorptionsmittels.

2. Verfahren nach Anspruch 1, wobei die mindestens eine Kolonne (C$_i$) mehrere Kolonnen (C$_i$) oder Adsorber umfasst, die in einem geschlossenen Kreislauf verbunden sind, wobei die Zufuhr- und Entnahmestellen der Kolonnen (C$_i$) oder Adsorber im Zeitverlauf um einen Wert versetzt sind, der einer Kolonne (C$_i$) oder einem Adsorber entspricht.

3. Verfahren nach Anspruch 1 oder Anspruch 2, wobei die mehreren Kolonnen (C$_i$) oder Adsorber mindestens 4 Kolonnen oder Adsorber umfassen.

4. Verfahren nach einem der vorhergehenden Ansprüche, wobei der adsorbierende Feststoff in den Zonen I bis IV gemäß den als Typ a / b / c / d bezeichneten Konfigurationen verteilt ist, d. h., dass die Verteilung des adsorbierenden Feststoffs, bezogen auf die Gesamtmenge des adsorbierenden Feststoffs, wie folgt ist:

- a ist die Menge des adsorbierenden Feststoffs in Zone I;
- b ist die Menge des adsorbierenden Feststoffs in Zone II;
- c ist die Menge des adsorbierenden Feststoffs in Zone III und
- d ist die Menge des adsorbierenden Feststoffs in Zone IV,

wobei im Verfahren:

-

$$a = 43\ \% \pm 9\ \%;$$

-

$$b = 29\ \% \pm 6\ \%;$$

-

$$c = 14\ \% \pm 3\ \%$$

und

-

$$d = 14\ \% \pm 3\ \%.$$

5. Verfahren nach Anspruch 1, wobei die mindestens eine Kolonne (C$_i$) mehrere Betten (A$_i$) mit adsorbierendem Feststoff umfasst, die in einem geschlossenen Kreislauf verbunden und durch Böden (P$_i$) getrennt sind, wobei die Zufuhr- und Entnahmestellen in den Böden (P$_i$) der Kolonne (C$_i$) im Zeitverlauf um einen Wert versetzt sind, der einem Adsorptionsmittelbett entspricht.

6. Verfahren nach Anspruch 5, wobei die mindestens eine Kolonne (C$_i$) zwischen 4 und 24 adsorbierende Betten (A$_i$) mit adsorbierendem Feststoff umfasst.

7. Verfahren nach Anspruch 5 oder Anspruch 6, wobei die Betten (A$_i$) mit adsorbierendem Feststoff in den Zonen I bis IV gemäß den als Typ a / b / c / d bezeichneten Konfigurationen verteilt sind, d. h., dass die Verteilung der Betten ($A_i$) mit adsorbierendem Feststoff wie folgt ist:

- a ist die Zahl der Betten in Zone I;
- b ist die Zahl der Betten in Zone II;
- c ist die Zahl der Betten in Zone III und
- d ist die Zahl der Betten in Zone IV,
wobei im Verfahren:

-

$$a = (t * 0{,}43) * (1 \pm 0{,}20);$$

-

$$b = (t * 0{,}29) * (1 \pm 0{,}20);$$

-

$$c = (t * 0{,}14) * (1 \pm 0{,}20)$$

und
-

$$d = (t * 0{,}14) * (1 \pm 0{,}20),$$

wobei im Verfahren t eine natürliche Zahl zwischen 4 und 24 ist.

8. Verfahren nach einem der vorhergehenden Ansprüche, wobei ein Teil des Extrakts (E) oder eines durch eine Konzentration und/oder Reinigung des Extrakts (E) erhaltenen Stroms Zone II zugeführt wird.

9. Verfahren nach einem der vorhergehenden Ansprüche, wobei der adsorbierende Feststoff lithiumhaltiges Bayerit und/oder lithiumhaltiges Böhmit umfasst.

10. Verfahren nach einem der vorhergehenden Ansprüche, wobei der adsorbierende Feststoff zwischen 0,1 Gew.-% und 5 Gew.-% des Elements Lithium, bezogen auf das Gesamtgewicht des adsorbierenden Feststoffs, umfasst.

11. Verfahren nach einem der vorhergehenden Ansprüche, wobei der adsorbierende Feststoff ein festes Material der Formel $(LiCl)_x.2Al(OH)_3,nH_2O$ umfasst, wobei n zwischen 0,01 und 10 beträgt und x zwischen 0,4 und 1 beträgt.

12. Verfahren nach einem der vorhergehenden Ansprüche, wobei das Einsatzmaterial (F) mindestens 0,1 g/l, bezogen auf das Gewicht, des Elements Lithium, bezogen auf das Gesamtgewicht des Einsatzmaterials, umfasst.

13. Verfahren nach einem der vorhergehenden Ansprüche, wobei die Schritte des Verfahrens bei einer Temperatur zwischen 0 °C und 120 °C durchgeführt werden.

14. Verfahren nach einem der vorhergehenden Ansprüche, wobei das Verhältnis zwischen dem Volumenstrom des Desorptionsmittels (D) und dem Volumenstrom des Einsatzmaterials (F) kleiner als 1 ist.

15. Vorrichtung zur Extraktion durch Lithiumadsorption in einem simulierten Fließbett, das die folgenden Elemente umfasst:

- mindestens eine Kolonne ($C_i$), die dafür ausgelegt ist, dass ihr mindestens ein Lithium umfassendes Einsatzmaterial (F) und ein Desorptionsmittel (D) zugeführt werden und dass mindestens ein Extrakt (E) und mindestens ein Raffinat (R) von der Kolonne ($C_i$) entnommen werden, wobei die mindestens eine Kolonne ($C_i$) einen adsorbierenden Feststoff umfasst, der mindestens ein lithiumhaltiges Aluminiumoxyhydroxid AlO(OH) und/oder mindestens ein lithiumhaltiges Aluminiumhydroxid $Al(OH)_3$ umfasst, die mindestens eine Kolonne ($C_i$) in einem

geschlossenen Kreislauf verbunden ist, die Zufuhr- und Entnahmestellen der mindestens einen Kolonne ($C_i$) im Zeitverlauf mit einer Permutationsdauer um einen Wert versetzt sind, der einer vorbestimmten Menge des adsorbierenden Feststoffs entspricht, und mehrere Betriebszonen der Kolonne ($C_i$) bestimmt werden und insbesondere die folgenden Hauptzonen definitionsgemäß mit einer Nummer bezeichnet werden:

- eine Zone I zur Desorption von Lithium zwischen einer Stelle zum Einspritzen des Desorptionsmittels und einer Stelle zum Entnehmen des Extrakts;
- eine Zone II zur Desorption von anderen Alkalimetallen als Lithium und/oder Erdalkalimetallen zwischen der Stelle zum Entnehmen des Extrakts und einer Stelle zum Einspritzen des Lithium umfassenden Einsatzmaterials;
- eine Zone III zur Adsorption von Lithium zwischen der Stelle zum Einspritzen des Einsatzmaterials und einer Stelle zum Entnehmen des Raffinats und
- eine Zone IV zwischen der Stelle zum Entnehmen des Raffinats und der Stelle zum Einspritzen des Desorptionsmittels.

## Claims

1. Simulated moving-bed lithium adsorption extraction process comprising the following step:

   - feeding at least one column ($C_i$) with at least one feed (F) comprising lithium and with a desorbent (D), and withdrawing at least one extract (E) and at least one raffinate (R) from the column ($C_i$), the at least one column ($C_i$) comprising a solid adsorbent comprising at least one lithiated aluminium oxyhydroxide AlO(OH) and/or at least one lithiated aluminium hydroxide $Al(OH)_3$, the at least one column ($C_i$) being interconnected in a closed loop, the feeding and withdrawal points of the at least one column ($C_i$) being shifted over time by a value corresponding to a predetermined amount of solid adsorbent having a switchover time, and a plurality of operating zones of the column ($C_i$) being defined, in particular the main zones below designated numerically as follows:

     - a zone I of lithium desorption between a point of injection of the desorbent and a point of withdrawal of the extract;
     - a zone II of desorption of alkali metals other than lithium and/or of alkaline earth metals between the point of withdrawal of the extract and a point of injection of the lithium-containing feed;
     - a zone III of lithium adsorption between the point of injection of the feed and a point of withdrawal of the raffinate; and
     - a zone IV between the point of withdrawal of the raffinate and the point of injection of the desorbent.

2. Process according to Claim 1, wherein the at least one column ($C_i$) comprises a plurality of columns ($C_i$) or adsorbers interconnected in a closed loop, the feeding and withdrawal points of the columns ($C_i$) or adsorbers being shifted over time by a value corresponding to a column ($C_i$) or an adsorber.

3. Process according to Claim 1 or Claim 2, wherein the plurality of columns ($C_i$) or adsorbers comprises at least 4 columns or adsorbers.

4. Process according to any one of the preceding claims, wherein the solid adsorbent is distributed in zones I to IV according to configurations referred to as type a / b / c / d configurations, that is to say the distribution of the solid adsorbent relative to the total amount of solid adsorbent is as follows:

   - a is the amount of solid adsorbent in zone I;
   - b is the amount of solid adsorbent in zone II;
   - c is the amount of solid adsorbent in zone III; and
   - d is the amount of solid adsorbent in zone IV,

   in which process:

   -

$$a = 43\% \pm 9\%;$$

-

$$b = 29\% \pm 6\%;$$

-

$$c = 14\% \pm 3\%;$$

and

-

$$d = 14\% \pm 3\%.$$

5. Process according to Claim 1, wherein the at least one column ($C_i$) comprises a plurality of beds of solid adsorbent ($A_i$) interconnected in a closed loop and separated by plates ($P_i$), the feeding and withdrawal points in the plates ($P_i$) of the column ($C_i$) being shifted over time by a value corresponding to a bed of adsorbent.

6. Process according to Claim 5, wherein the at least one column ($C_i$) comprises between 4 and 24 beds of solid adsorbent ($A_i$).

7. Process according to Claim 5 or Claim 6, wherein the beds of solid adsorbent ($A_i$) are distributed in zones I to IV according to configurations referred to as type a / b / c / d configurations, that is to say the distribution of the beds of solid adsorbent ($A_i$) is as follows:

    - a is the number of beds in zone I;
    - b is the number of beds in zone II;
    - c is the number of beds in zone III; and
    - d is the number of beds in zone IV,

in which process:

-

$$a = (t * 0.43) * (1 \pm 0.20);$$

-

$$b = (t * 0.29) * (1 \pm 0.20);$$

-

$$c = (t * 0.14) * (1 \pm 0.20);$$

and

-

$$d = (t * 0.14) * (1 \pm 0.20),$$

in which process t is a natural integer between 4 and 24.

8. Process according to any one of the preceding claims, wherein a portion of the extract (E) or a stream obtained by concentrating and/or purifying said extract (E) is fed to zone II.

9. Process according to any one of the preceding claims, wherein the solid adsorbent comprises lithiated bayerite and/or lithiated boehmite.

10. Process according to any one of the preceding claims, wherein the solid adsorbent comprises between 0.1% by weight and 5% by weight of the element lithium relative to the total weight of the solid adsorbent.

11. Process according to any one of the preceding claims, wherein the solid adsorbent comprises a solid material of formula $(LiCl)_x \cdot 2Al(OH)_3 \cdot nH2O$, where n is between 0.01 and 10 and x is between 0.4 and 1.

12. Process according to any one of the preceding claims, wherein the feed (F) comprises at least 0.1 g/L by weight of the element lithium relative to the total weight of the feed.

13. Process according to any one of the preceding claims, wherein the steps of the process are carried out at a temperature of between 0°C and 120°C.

14. Process according to any one of the preceding claims, wherein the ratio of the volume flow rate of the desorbent (D) to the volume flow rate of the feed (F) is less than 1.

15. Simulated moving-bed lithium adsorption extraction apparatus comprising the following elements:

- at least one column $(C_i)$ suitable for being fed with at least one feed (F) comprising lithium and with a desorbent (D) and for the withdrawal of at least one extract (E) and at least one raffinate (R) from the column $(C_i)$, the at least one column $(C_i)$ comprising a solid adsorbent comprising at least one lithiated aluminium oxyhydroxide AlO(OH) and/or at least one lithiated aluminium hydroxide $Al(OH)_3$, the at least one column $(C_i)$ being interconnected in a closed loop, the feeding and withdrawal points of the at least one column $(C_i)$ being shifted over time by a value corresponding to a predetermined amount of solid adsorbent having a switchover time, and a plurality of operating zones of the column $(C_i)$ being defined, in particular the main zones below designated numerically as follows:

- a zone I of lithium desorption between a point of injection of the desorbent and a point of withdrawal of the extract;
- a zone II of desorption of alkali metals other than lithium and/or of alkaline earth metals between the point of withdrawal of the extract and a point of injection of the lithium-containing feed;
- a zone III of lithium adsorption between the point of injection of the feed and a point of withdrawal of the raffinate; and
- a zone IV between the point of withdrawal of the raffinate and the point of injection of the desorbent.

Fig. 1

Fig. 2

Fig. 3

# EP 4 452 439 B1

## RÉFÉRENCES CITÉES DANS LA DESCRIPTION

**Documents brevets cités dans la description**

- FR 3053264 A1